# EUROPÄISCHE PATENTSCHRIFT

(11) **EP 0 934 891 B1**
(45) Veröffentlichungstag und Bekanntmachung des Hinweises auf die Patenterteilung: **23.11.2005**
(21) Anmeldenummer: 98102030.8
(22) Anmeldetag: 05.02.1998
(51) Int. Cl.: B65G 1/137

(54) **Kommisionieranlage**
Commissioning installation
Installation pour la préparation de marchandises pour l'expédition

(43) Veröffentlichungstag der Anmeldung: 11.08.1999
(73) Patentinhaber: Pierau Unternehmensberatung GmbH, 22391 Hamburg (DE)
(72) Erfinder: Lembke, Wulf, 22159 Hamburg (DE)
(74) Vertreter: Glawe, Delfs, Moll

(56) Entgegenhaltungen:
- EP-A- 0 183 074
- EP-A- 0 210 438
- EP-A- 0 215 967
- EP-A- 0 471 150
- WO-A-97/03903
- DE-A- 3 927 843
- US-A- 5 406 770
- WELLINGER B ET AL: "NEUES KOMMISSIONIERKONZEPT FUER GROSSVERTEILER" FORDERN UND HEBEN, Bd. 41, Nr. 10, 1.Oktober 1991, Seite 774, 777 XP000229784

## Beschreibung

Die Erfindung betrifft eine Kommissionieranlage mit einem *ersten Stetigförderer zum Sammeln von für einen bestimmten Abnehmer vorgesehenen, von einer Bedienungsperson aufgelegten Waren und zum Transportieren derselben zu einer Packstation, der in Abschnitte unterteilt ist, die eine Identi*fizierung aufweisen, *wobei* nach dem Sammelbereich *eine automatische Leseeinrichtung zum Lesen von Markierungen der Waren angeordnet ist.*

Bei der Auslieferung aus einem Lager müssen Waren aus den verschiedenen Regalen herausgesucht, für die einzelnen Kunden zusammengestellt (kommissioniert) und versandt werden. Die entsprechenden Bearbeitungsvorgänge und -zeiten insbesondere in einem Versandhandelsunternehmen sind sehr groß, so daß man sich hier mechanisierter Kommissionieranlagen bedienen muß. Bei einer bekannten Kommissionieranlage werden mit einem Förderer Behälter auf einem vorbestimmten Weg durch alle Regale geleitet, wobei für jeden Empfänger ein Behälter vorgesehen ist. Die entsprechenden Gegenstände bzw. Waren werden dann von Hand in die Behälter gelegt. Am Schluß bei der Packstation oder vor der Packstation findet dann eine manuelle Kontrolle statt, ob tatsächlich alle Waren richtig gesammelt worden sind. Die Waren werden dann verpackt; der Behälter wird an den Ausgangspunkt zurückgeschickt.

Diese bekannte Anlage hat einerseits den Nachteil, daß die leeren Behälter immer wieder zurücktransportiert werden müssen. Andererseits ist die manuelle Kontrolle zeitaufwendig, langsam und bringt auch Fehlermöglichkeiten durch menschlichen Irrtum mit sich.

*Bei einer weiteren* bekannten *Kommissionieranlage werden die Waren von Hand in Behälter abgelegt* und *erst anschließend* automatisch *auf den Stetigförderer aufgebracht (WO 97 03903*). *Eine* weder eine automatische *Kontrolle* noch unterschiedlich große Sammelbehälter werden *erwähnt*.

Bei *einer Kommissionieranlage der eingangs genannten Art werden die Waren mit dem Stetigförderer zu einer Packstation gefördert, in der sie auf Paletten geladen werden, die* zu den Abnehmern transportiert werden sollen (welliger B. et *al: "*Neues *Kommissionierkonzept für Großverteiler*", *Fördern und Heben, Bd. 41*, *Nr*. *10, 1*, *Oktober 1991*, *Seite 774, 777 XP000229784*). *Bei dieser Kommissionieranlage ist eine Leseeinrichtung vorgesehen, damit die Fakturen vollständig mit den Lieferungen übereinstimmen. Maßnahmen zur Überprüfung, ob die Lieferung mit der Bestellung übereinstimmt,* sind dort nicht erwähnt.

Die Aufgabe der Erfindung besteht in der Schaffung einer Kommissionieranlage, durch die die genannten Nachteile vermieden werden und die wesentlich schneller und zuverlässiger arbeitet, so daß sie auch für sehr große Versandhandelsunternehmen einsetzbar ist.

*Die erfindungsgemäße Lösung besteht darin, dass die Kommissionieranlage einen zweiten Förderer zum mit der Warenförderung auf dem ersten Förderer synchronen Zuführen und Abführen von Kartons unterschiedlicher Größe für die für den Abnehmer bestimmten Waren in die bzw. aus der Packstation umfasst und dass die Leseeinrichtung eine Fehlermeldung ausgibt, wenn die gesammelten Waren nicht richtig oder nicht vollständig zusammengestellt sind.*

Es werden also keine Behälter mehr verwendet, die wieder zurücktransportiert werden müssen, sondern ein Stetigförderer, z.B. ein Bandförderer. Dieser ist in insbesondere optisch gut markierte Abschnitte oder Felder unterteilt, die bezeichnet, insbesondere numeriert sind. Die Abschnitte müssen optisch gut voneinander getrennt sein, damit immer eindeutig festgestellt werden kann, auf welchem Abschnitt Waren gelegt werden sollen. Die Identifizierung eines Abschnitts braucht nicht optisch, sondern kann auch mit elektronischen Mitteln erfolgen. Dieser Stetigförderer bewegt sich an allen Regalen oder zumindest in der Nähe aller Regale vorbei, so daß auf jeden Abschnitt, der jeweils einem Kunden zugeordnet ist, die gewünschten Waren aufgelegt werden können. Diese Waren weisen dabei Markierungen, z.B. Strichcodes auf. Die Vollständigkeit und Richtigkeit der Waren, die gesammelt wurde, braucht nun nach dem Sammelbereich nicht mehr von Hand kontrolliert zu werden. Hier ist vielmehr eine Einrichtung zum Lesen der Markierungen vorgesehen, so daß die Kontrolle und gegebenenfalls eine Fehlermeldung automatisch und ohne menschliches Zutun erfolgt. Dieses Lesen ist möglich, wenn die Waren nicht in Behältern, sondern auf dem Stetigförderer, insbesondere Bandförderer liegend transportiert werden.

Vorteilhafterweise wird in der Packstation jeweils ein Karton für die für den Kunden bestimmten Waren durch einen zweiten Förderer zugeführt und nach dem Befüllen weggeführt. Die ganze Anlage kann damit kontinuierlich betrieben werden. Wenn jeweils ein Abschnitt des Stetigförderers in der Packstation ankommt, können die Waren sofort in den Karton verpackt werden, der dann weggeführt wird. Dabei kann zur weiteren Beschleunigung vorgesehen sein, daß in der Packstation die Waren zunächst nur lose in den Karton eingeordnet werden und dann in einer weiteren Packstation noch geordneter im Karton untergebracht werden, bevor derselbe verschlossen und zum Versand gebracht wird.

Es ist ohne weiteres möglich, daß an dem zweiten Förderer mehrere Packstationen mit je einem Stetigförderer vorgesehen sind. Der Stetigförderer braucht damit nicht mehr an allen Regalen oder in der Nähe aller Regale vorbeigeführt zu werden. Es können vielmehr für unterschiedliche Regalbereiche unterschiedliche Stetigförderer vorgesehen sein. Die Stetigförderer und die Förderer für die Kartons sind dabei so synchronisiert, daß der für einen vorgegebenen Kunden bestimmte Karton in einer ersten Packstation bereits teilweise gefüllt wurde und dann in der zweiten oder jeder weiteren Packstation genau in dem Moment ankommt, wo der Abschnitt des dort endenden Stetigförderers neue Waren für diesen Kunden heranbringt.

Das Heraussuchen aus den Regalen und richtige Auflegen der Waren auf den Stetigförderer erfolgt entsprechend der Auftragsvorgabe. Die Regale werden in Pickbereiche unterteilt. Sowie der Abschnitt einen Pickbereich durchläuft, aus dem Artikel für Aufträge dieser Sektion entnommen werden sollen, leuchten am Regalfach Kennungen mit Hinweis auf den zu entnehmenden Artikel und den Abschnitt auf.

Der Bezug zwischen Abschnitt und Artikelentnahme kann auch über Pickeretiketten erfolgen, auf denen Regalfach-Nr., Art.-Nr., Stückzahl des zu entnehmenden Artikels und Abschnittsnummer vermerkt ist. Das Pickeretikett wird auf die einzelnen Artikel geklebt und diese auf den Abschnitt gelegt.

Die Möglichkeit mit den Pickeretiketten bietet den Vorteil, daß die Kontrolle der Sektion über das Pickerlabel am Ende des Sektionsförderers erfolgen kann. Ohne Verwendung von Pikkeretiketten ist dieses nur über eine lesbare Artikel-Nr. möglich, die auf jedem Artikel aufgebracht sein muß.

Bei zweistufiger Kommissionierung werden Artikel entsprechend der Auftragsvorgabe aus dem Regalfach entnommen, auf einem Transportwagen abgelegt (Pickerwagen) und dieser zu einer (von mehreren) Aufgabestationen am Stetigförderer transportiert.

Während der Entnahme aus dem Regal werden die Artikel mit Pickeretiketten beklebt, die als Kommissionierbeleg pro Artikel dienen und Angaben enthalten wie Regelfach, Artikel-Nr. und Abschnittsnummer.

Für die zweite Kommissionierstufe wird der beklebte Artikel vom Pickerwagen genommen und auf das Abschnittsfeld des vorbeilaufenden Förderers gelegt. Die Aufgabe erfolgt (kann erfolgen) von mehreren Personen und mehreren Pickerwagen nacheinander, entsprechend dem Vorbeilaufen des Abschnittsfeldes. Am Ende ist ein Auftrag auf einem Abschnittsfeld zusammengestellt und kann durch die Leseeinrichtungen auf Richtigkeit und Komplettheit geprüft werden.

Die Einrichtungen zum Lesen der Markierungen können eine Kamera aufweisen. Bei einer anderen vorteilhaften Ausführungsform weisen diese Einrichtungen einen Scanner auf.

Vorteilhafterweise ist die Geschwindigkeit, mit der die Anlage arbeitet, steuerbar, um sie so unterschiedlichen Betriebsbedingungen anpassen zu können.

Die Erfindung wird im folgenden anhand einer vorteilhaften Ausführungsform unter Bezugnahme auf die beigefügten Zeichnungen beschrieben. Es zeigen:
- Fig. 1: das Prinzip einer Kommissionieranlage der Erfindung von oben und
- Fig. 2: die Kommissionieranlage der Fig. 1 von vorne.

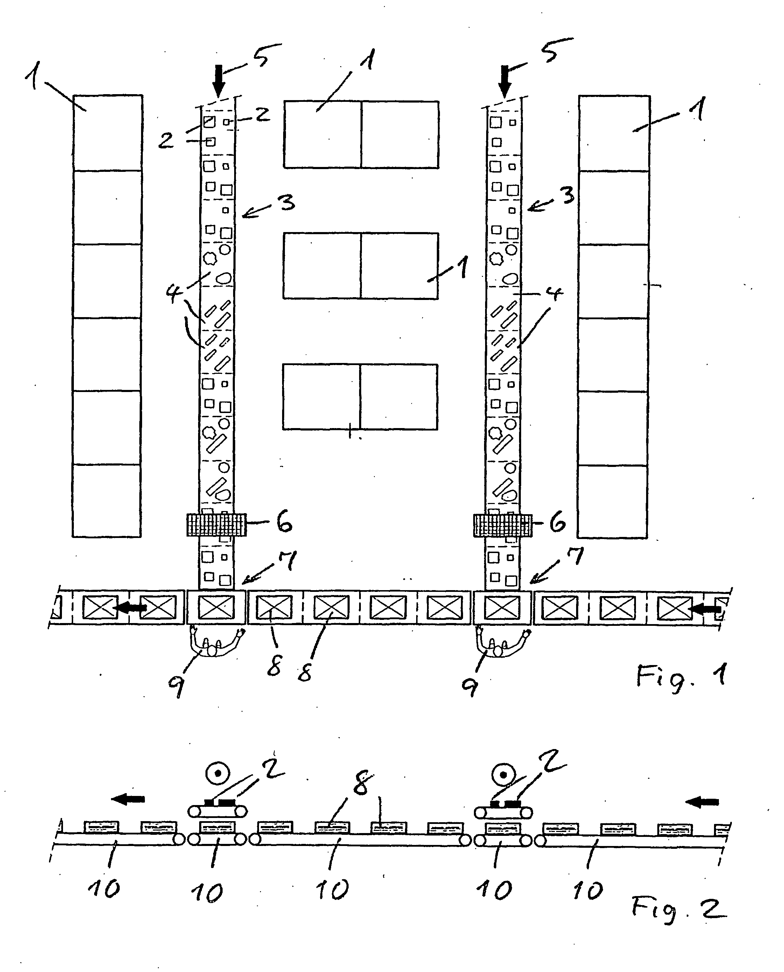

In Fig. 1 ist eine Vielzahl von Regalen 1 gezeigt, aus denen Waren zum Versand entnommen werden sollen. Die Waren oder Gegenstände 2 werden dazu aus den Regalen 1 entnommen und auf einen Stetigförderer 3 gelegt, der in Abschnitte 4 unterteilt ist, wobei jeder Abschnitt 4 einem bestimmten Kunden zugeordnet ist. Dieser Vorgang kann entweder so erfolgen, daß die Waren 2 direkt aus dem Regal 1 auf den Abschnitt 4 gelegt werden. Der Bedienungsperson kann dabei durch Lichtsignale bei dieser Arbeit geholfen werden, die gleichzeitig den zu beladenden Abschnitt 4 sowie den Gegenstand im Regal 1 bzw. eine entsprechende Kennzeichnung im Regal 1 beleuchten. Andererseits kann dieses Beladen aber auch durch schriftliche Anweisungen, insbesondere Selbstklebeetiketten erfolgen, die dann anschließend auf die Ware aufgeklebt werden. Bei einer dritten Möglichkeit werden die Waren schließlich zunächst aus dem Regal 1 entnommen und auf einen Wagen geladen, der dann anschließend an den Förderer 3 herangefahren wird, so daß die richtigen Waren 2 auf den richtigen Abschnitt 4 des Stetigförderers 3 aufgelegt werden können. Diese Möglichkeit ist insbesondere dann zweckmäßig, wenn die Regale oder zumindest ein Teil der Regale einen größeren Abstand vom Stetigförderer 3 aufweisen.

Der Stetigförderer 3 wird in Richtung des Pfeils 5 weiterbewegt und durchläuft nach dem Ende der Sammelzone eine Einrichtung 6, in der die Markierungen der Waren gelesen werden können. Gleichzeitig wird hier die Identifizierung des Abschnittes 4 festgestellt, so daß sichergestellt ist, daß der richtige Kunde tatsächlich alle Waren erhält, die er bestellt hat. Anschließend wird der Inhalt des Abschnitts 4 in einer Packstation 7 in einem Karton 8 abgelegt, wobei diese Tätigkeit noch durch eine Bedienungsperson 9 kontrolliert und/oder gesteuert werden kann. Die Kartons 8 werden dabei, wie dies in Fig. 2 gezeigt ist, durch einen Förderer 10, der in der Figur aus mehreren Teilen besteht, synchron so zu der Packstation 7 gebracht, daß je nach Bestellumfang für den richtigen Kunden die richtige Kartongröße zugeführt wird. Die Anlage kann mit einem Stetigförderer 3 und einer Packstation 7 betrieben werden. Es ist jedoch auch möglich, wie dies in Fig. 1 gezeigt ist, hintereinander mehrere Packstationen 7 mit entsprechenden Stetigförderern 3 vorzusehen. In diesem Falle ist die Anlage so zu synchronisieren, daß der in der ersten Station 7 teilweise befüllte Karton 8 für einen bestimmten Kunden in der zweiten Packstation 7 gerade dann ankommt, wenn ein Abschnitt 4 des zweiten Stetigförderers 3 in denselben entladen werden soll.

Durch die erfindungsgemäße Kommissionieranlage ist es möglich, auf kostengünstige Weise die Kommissionierung schnell und zuverlässig durchzuführen, auch wenn große Mengen von Waren kommissioniert werden müssen.

## Patentansprüche

1. Kommissionieranlage mit einem ersten Stetigförderer (3) zum Sammeln von für einen bestimmten Abnehmer vorgesehenen, von einer Bedienungsperson aufgelegten Waren (2) und zum Transportieren derselben zu einer Packstation (7), der in Abschnitte unterteilt ist, die eine Identifizierung aufweisen, wobei nach dem Sammelbereich eine automatische Leseeinrichtung (6) zum Lesen von Markierungen der Waren (2) angeordnet ist, **dadurch gekennzeichnet, dass** sie einen zweiten Förderer (10) zum mit der Warenförderung auf dem ersten Förderer (3) synchronen Zuführen und Abführen von Kartons (8) unterschiedlicher Größe für die für den Abnehmer bestimmten Waren (2) in die bzw. aus der Packstation (7) umfasst und dass die Leseeinrichtung (6) eine Fehlermeldung ausgibt, wenn die gesammelten Waren (2) nicht richtig oder nicht vollständig zusammengestellt sind.

2. Kommissionieranlage nach Anspruch 1, **dadurch gekennzeichnet, dass** an dem zweiten Förderer (10) mehrere Packstationen (7) mit je einem Stetigförderer (3) vorgesehen sind.

3. Kommissionieranlage nach einem der Ansprüche 1 oder 2, **dadurch gekennzeichnet, dass** zum Heraussuchen und richtigen Auflegen der Waren (2) auf den Stetigförderer (3) Lichtsignalmittel vorgesehen sind.

4. Kommissionieranlage nach einem der Ansprüche 1 bis 3, **dadurch gekennzeichnet, dass** zum Heraussuchen und richtigen Auflegen der Waren (2) gedruckte Hilfsmittel vorgesehen sind.

5. Kommissionieranlage nach Anspruch 4, **dadurch** gekenntzeichnet, dass die gedruckten Hilfsmittel Selbstklebeetiketten sind.

6. Kommissionieranlage nach Anspruch 5, **dadurch gekennzeichnet, dass** die Leseeinrichtung (6) zum Lesen der Markierungen der Selbstklebeetiketten ausgebildet ist.

7. Kommissionieranlage nach einem der Ansprüche 1 bis 6 **dadurch gekennzeichnet, dass** sie Wagen zum Sammeln der Waren (2) und zum Heranfahren an den Stetigförderer (3) aufweist.

8. Kommissionieranlage nach einem der Ansprüche 1 bis 7, **dadurch gekennzeichnet, dass** die Leseeinrichtung (6) eine Kamera oder einen Scanner aufweist.

9. Kommissionieranlage nach einem der Ansprüche 1 bis 8, **dadurch gekennzeichnet, dass** die Geschwindigkeit steuerbar ist.

## Claims

1. Commissioning system with a first continuous conveyor (3) for collecting goods (2) which are intended for a certain customer and are deposited by an operator and for transporting these to a packing station (7) which is divided into sections which have an identification, wherein an automatic reading device (6) for reading markings of the goods (2) is disposed after the collecting area, **characterised in that** it comprises a second conveyor (10) for feeding and removing cardboard boxes (8) of differing size for the goods (2) intended for the customer into and out of the packing station (7) synchronously with the conveyance of the goods on the first conveyor (3), and that the reading device (6) delivers an error message if the collected goods (2) are incorrectly or incompletely assembled.

2. Commissioning system according to Claim 1, **characterised in that** a plurality of packing stations (7) with a respective continuous conveyor (3) are provided at the second conveyor (10).

3. Commissioning system according to either of Claims 1 and 2, **characterised in that** light signal means are provided to select and correctly deposit the goods (2) on the continuous conveyor (3).

4. Commissioning system according to any one of Claims 1 to 3, **characterised in that** printed aids are provided to select and correctly deposit the goods (2).

5. Commissioning system according to Claim 4, **characterised in that** the printed aids are self-adhesive labels.

6. Commissioning system according to Claim 5, **characterised in that** the reading device (6) is formed to read the markings of the self-adhesive labels.

7. Commissioning system according to any one of Claims 1 to 6, **characterised in that** it comprises trucks for collecting the goods (2) and for moving up to the continuous conveyor (3).

8. Commissioning system according to any one of Claims 1 to 7, **characterised in that** the reading device (6) comprises a camera or a scanner.

9. Commissioning system according to any one of Claims 1 to 8, **characterised in that** the speed is controllable.

## Revendications

1. Installation pour la préparation de marchandises pour l'expédition, avec un premier transporteur en continu (3) pour rassembler des marchandises (2) prévues pour un acquéreur déterminé et mises en place par un opérateur et pour transporter cette marchandise vers une station d'emballage (7), lequel est subdivisé en sections comprenant une identification, un dispositif de lecture automatique (6) pour la lecture de marquages se trouvant sur les marchandises (2) étant placé après la zone de collecte, **caractérisée en ce qu'**elle comprend un deuxième transporteur (10) pour assurer de manière synchronisée avec le transport des marchandises sur le premier transporteur (3) une amenée dans la station d'emballage (7) et une évacuation à partir de celle-ci de cartons (8) de différentes tailles servant pour les marchandises (2) destinées à l'acquéreur et **en ce que** le dispositif de lecture (6) émet un message d'erreur si la composition des marchandises collectées (2) n'est pas appropriée ou est incomplète.

2. Installation pour la préparation de marchandises pour l'expédition selon la revendication 1, **caractérisée en ce que** sur le deuxième transporteur (10) sont prévues plusieurs stations d'emballage (7) disposant respectivement d'un transporteur en continu (3).

3. Installation pour la préparation de marchandises pour l'expédition selon l'une quelconque des revendications 1 ou 2, **caractérisée en ce que** des moyens comportant des signaux lumineux sont prévus pour chercher ou pour placer les marchandises (2) dans une position appropriée sur le transporteur en continu (3).

4. Installation pour la préparation de marchandises pour l'expédition selon l'une quelconque des revendications 1 à 3, **caractérisée en ce que** des moyens auxiliaires imprimés sont prévus pour chercher ou pour placer les marchandises (2) dans une position appropriée.

5. Installation pour la préparation de marchandises pour l'expédition selon la revendication 4, **caractérisée en ce que** les moyens auxiliaires imprimés sont des étiquettes autocollantes.

6. Installation pour la préparation de marchandises pour l'expédition selon la revendication 5, **caractérisée en ce que** le dispositif de lecture (6) est configuré pour la lecture des marquages se trouvant sur les étiquettes autocollantes.

7. Installation pour la préparation de marchandises pour l'expédition selon l'une quelconque des revendications 1 à 6, **caractérisée en ce qu'**elle comprend des chariots pour collecter les marchandises (2) et pour les approcher du transporteur en continu (3).

8. Installation pour la préparation de marchandises pour l'expédition selon l'une quelconque des revendications 1 à 7, **caractérisée en ce que** le dispositif de lecture (6) comprend une caméra ou un scanner.

9. Installation pour la préparation de marchandises pour l'expédition selon l'une quelconque des revendications 1 à 8, **caractérisée en ce que** la vitesse peut être commandée.
